# EUROPEAN PATENT SPECIFICATION

(11) **EP 1 455 929 B1**
(45) Date of publication and mention of the grant of the patent: **09.04.2008**
(21) Application number: 02776477.8
(22) Date of filing: 08.11.2002
(51) Int. Cl.: B01D 53/79, F23J 7/00, F23N 5/00

(54) **CONTINUOUSLY-VARIABLE CONTROL OF POLLUTION REDUCING CHEMICALS FOR COMBUSTION SOURCES**
STUFENLOS EINSTELLBARE STEUERUNG VON UMWELTVERSCHMUTZUNG VERRINGERNDEN CHEMIKALIEN FÜR VERBRENNUNGSQUELLEN
COMMANDE VARIABLE EN CONTINU DE PRODUITS CHIMIQUES RÉDUISANT LA POLLUTION POUR DES SOURCES DE COMBUSTION

(30) Priority: 09.11.2001 US 348314 P
(43) Date of publication of application: 15.09.2004
(73) Proprietor: CLEAN DIESEL TECHNOLOGIES, INC., Stamford, CT 06901 (US)
(72) Inventor: VALENTINE, James, M., Fairfield, CT 06824 (US)
(74) Representative: Vossius & Partner
(86) International application number: PCT/US2002/036001
(87) International publication number: WO 2003/039737

(56) References cited:
- US-A- 4 842 834
- US-A- 4 985 218
- US-A- 5 431 893
- US-B1- 6 279 603
- PATENT ABSTRACTS OF JAPAN -& JP 02 268774 A (NOHMI BOSAI), 2 November 1990 (1990-11-02)
- PATENT ABSTRACTS OF JAPAN vol. 1998, no. 13, 30 November 1998 (1998-11-30) -& JP 10 212931 A (HINO MOTORS), 11 August 1998 (1998-08-11)
- PATENT ABSTRACTS OF JAPAN -& JP 04 179849 A (NIPPON CARBURETER), 26 June 1992 (1992-06-26)
- PATENT ABSTRACTS OF JAPAN vol. 6, no. 208, 20 October 1982 (1982-10-20) -& JP 57 117324 A (HITACHI SEISAKUSHO), 21 July 1982 (1982-07-21)

## Description

The invention concerns improvements in the operation of secondary pollution control devices that rely on injection of reductant chemicals. The invention enables increasing pollution reduction and/or economy despite the existence of widely variable combustor loads.

Efforts are being made in many jurisdictions to reduce the emissions of regulated pollutants like carbon monoxide, nitrogen oxides (NOₓ) sulfur oxides (SOₓ) and particulates. The technologies have included those that modify combustion conditions and fuels, known as primary measures, and those that treat the exhaust after combustion, known as secondary measures. When effective primary measures are employed, the secondary measures can still be employed to achieve further reductions.

Among the known secondary measures for NOₓ reduction are selective catalytic reduction (SCR) and selective noncatalytic reduction (SNCR). Each has been conducted with both ammonia and urea. See, for example U. S. Patent No. 3,900,554, wherein Lyon discloses reducing nitrogen monoxide (NO) in a combustion effluent by injecting ammonia, specified ammonia precursors or their aqueous solutions into the effluent for mixing with the nitrogen monoxide at a temperature effective for NOₓ reduction. Similar processes are taught for urea by Arand, Muzio, and Sotter, in U.S. Pat. No. 4,208,386, and Arand, Muzio, and Teixeira, in U.S. Pat. No. 4,325,924. Again the temperatures are high, and the use of lower temperatures is not enabled.

For the control of SOₓ, similar secondary measures have been employed. For example, in U. S. Patent No. 5,658,547 Michalak describes a system wherein calcium carbonate or the like is injected into the combustion gases from a large combustor to chemically combine with sulfur containing gases to reduce emissions of SOₓ as urea is being injected to control NOₓ by SCR.

A number of injector arrangements have been described over the years for achieving the best possible chemical introduction and distribution. For example, in U. S. Patent No. 4,842,834, Bowers describes a coaxial, multi-tube structure for supplying fluid pollution control chemical with the aid of a dispersant or carrier fluid. Similary, in U. S. Patent No. 4,985,218, DeVita describes another multi-tube design. In WO 91/17814, Chawla, *et al.,* describe a. nozzle capable of injecting a two phase fluid at sonic velocity. And, in U. S. Patent No. 5,658,547,

To protect the catalyst from fouling, Hug, *et al.,* propose in U. S. Patent No. 5,431,893, to Hug, *et al*., air atomized injection equipment capable of treating an effluent with urea. This disclosure highlights the problems making it a necessity that the urea solution is maintained at a temperature below 100 C to prevent hydrolysis in the injection equipment. They propose the use of moderate urea pressures when feeding the urea and find it necessary to have alternative means to introduce high-pressure air into the feed line when it becomes plugged. The nozzles employed by Hug, *et al*., use auxiliary air to aid dispersion. Also, they employ dilute solutions that require significant heating to simply evaporate the water. See also, WO 97/01387 and European Patent Specification 487,886 A1.

The problem of urea breakdown is handled differently in U. S. Patent No. 6,063,350 to Tarabulski, *et al*., which describes the use of a constant flow of urea to and from an injector to maintain the feed lines and injector devices at a relatively low temperature. One nozzle suitable for this type of operation is described in U. S. Patent No. 6,279,603 to Czamik, *et al*. the injector described enables delivery of a fluid into a stream of hot gas while protecting the fluid and the injector. Fluid is circulated through an annular passageway within the injector to cool it in a manner not interfering and in fact promoting the expulsion of a portion of the fluid through an orifice when the orifice is opened.

In U. S. Patent No. 5,315,941, Vetterick, *et al*,. describe a method and apparatus for injecting NOₓ-inhibiting reagent into flue gas, wherein a conduit with a nozzle for injecting NOₓ-inhibiting reagent into an appropriate temperature window in the flue gas of a package, utility, or industrial type boiler to reduce emissions of NOₓ. A sensor is mounted adjacent the nozzle to measure the flue gas temperature, thereby locating the appropriate temperature window, and a controlled drive for moving the nozzle to the temperature window.

Similarly, in U. S. Patent No. 5,585,072, Moskal, *et al*,. describe a retractable chemical injection device especially adapted for introducing a chemical reactant solution into a large scale combustion device such as a fossil fuel fired boiler. The device incorporates a lance tube mounted to a elongated frame located outside of the combustion device which enables the lance tube to be extended into and retracted from the combustion device flue gas stream. The lance tube carries a plurality of axially distributed discharge nozzles enabling the chemical reactant entrained in an injection carrier to be ejected from the nozzles. The injection device provides for atomization of the chemical reactant solution before the mixture passes into the lance tube which cools the lance tube and aids distribution of the chemical solution to the distributed discharge nozzles.

Reference can also be made to different systems described in U. S. Patent No. 6,016,653 to Glassey, *et al*., and WO 98/28070 to Peter-Hoblyn, *et al*.

There is a need for improvements in pollution reduction and/or economy of operation despite the existence of widely variable combustor loads.

It is an object of the invention to provide improvements in pollution reduction and/or economy of operation for combustors of all types, despite the existence of widely variable combustor loads.

It is a more specific object of the invention to provide an improved chemical introduction system for continuously controlling the introduction of pollution reducing chemicals for reducing emissions from combustion sources.

It is another specific object of the invention to provide an improved chemical introduction system for variably controlling the introduction of pollution reducing chemicals for reducing emissions from combustion sources.

It is another specific object of the invention to provide an improved chemical introduction system for continuously and variably controlling the introduction of pollution reducing chemicals for reducing emissions from combustion sources.

These and other objects are accomplished by the invention, which provides a method and apparatus for continuously and variably controlling the introduction of pollution reducing chemicals for reducing emissions from combustion sources.

In one of the preferred method aspects of the invention, a plurality of separately-controllable, solenoid-actuated, pulse-width modulated metering valve means are comprised in supply nozzles at a plurality of locations within a defined space containing combustion gases including one or more pollutant species to be treated, combustion gas conditions , e.g., within the defined space or downstream thereof, are monitored by sensor means, which send an effluent characteristic signal representative of the conditions monitored to a controller, and the controller compares the effluent characteristic signal to reference data and sends a control signal based on the comparison to one or more of the solenoid-actuated, pulse-width modulated metering valve means to precisely control the introduction of pollution control chemical into the effluent.

A preferred form of apparatus for continuously and variably controlling the introduction of pollution reducing chemicals for reducing emissions from combustion sources according to the invention, comprises: a plurality of separately-controllable, solenoid-actuated, pulse-width modulated metering valve means comprised in supply nozzles at a plurality of locations within a defined space containing combustion gases including one or more pollutant species to be treated, sensor means for monitoring combustion gas conditions, e.g., within the defined space or downstream thereof, and for sending an effluent characteristic signal representative of the conditions monitored to a controller, and a controller for comparing the effluent characteristic signal to reference data and for sending a control signal based on the comparison to one or more of the solenoid-actuated, pulse-width modulated metering valve means to control the introduction of pollution control chemical into the effluent.

Many of the preferred aspects of the invention are described below. Equivalent compositions are contemplated.

The invention will become more clear and its advantages more apparent when the following detailed description is read in light of the accompanying drawings, wherein:
Figure 1 schematically illustrates a horizontal cross section taken through a representative commercial boiler and showing a plurality of injection nozzles;
Figure 2 schematically shows, in cross section, the principal components of a preferred form of injection nozzle according to the invention;
Figure 3 schematically shows an enlarged cross sectional view of a metering valve useful according to the invention; and
Figure 4 schematically shows, in block diagram format, a controller 30 for comparing the effluent characteristic signals derived from one or a plurality of sensors (1-4 shown) to reference data maintained within the controller and for sending a control signal based on the comparison to one or more of the solenoid-actuated, pulse-width modulated metering valve means (1-4 shown)

The invention concerns improvements in pollution reduction and/or economy of operation, which can be achieved despite the existence of widely variable combustor loads. A plurality of separately-controllable, supply nozzles incorporating pulse-width modulated, solenoid-actuated metering valves precisely control the introduction of pollution control chemicals into the effluent of a combustor. The nozzles and the pollution control chemicals are protected against overheating, thereby providing an additional feature of reliability to the improvements in efficiency and economy.

In a preferred aspect, this invention enables precise control of liquid reagent injection into boilers, process heaters, exhaust ducts of internal combustion (IC) engines or gas turbines or reactor vessels used in control of sulfur oxides (SOₓ) such as sulfur dioxide and the more corrosive sulfur trioxide, nitrogen oxides (NOₓ) such as nitrogen monoxide and the possibly more troublesome nitrogen dioxide or other gases, and reactors used to convert urea to ammonia for injection, by the use of a pulse width modulated, solenoid actuated metering valve.

Many calcium and magnesium-based sorbents for SOₓ reduction are known, including lime, calcium carbonate, magnesium carbonate, calcium hydroxide, magnesium hydroxide, and mixtures thereof, such as in the common mineral forms of limestone, dolomite, and other forms of calcium or magnesium carbonates including oyster shells, aragonite, calcite, chalk, marble, marl, and travertine. Dolomite is a preferred form including magnesium carbonate. Limestone is another preferred form of calcium carbonate but can be replaced with another form of alkaline calcium, *e*.*g*., lime hydrate, if desired. It can be mined or manufactured. In this description, the terms calcium carbonate and limestone are used interchangeably. Mixtures are specifically intended.

Various NH-containing compositions, in their pure and typical commercial forms, will generate effective gas phase NOₓ reducing agents (e.g., the amidozine radical, a free radical consisting of nitrogen and hydrogen, NH··) when introduced in aqueous solution and subjected to elevated temperatures. Among the prominent NH-containing compositions are those selected from the group consisting of ammonia, ammonia precursors (materials which when heated or dissolve in water give off ammonia), urea, urea precursors (materials which when heated or dissolved in water yield urea), urea hydrolysis products (such as ammonium carbamate, ammonium carbonate, ammonium bicarbonate, and ammonium hydroxide), products of reaction of urea with itself or other compositions, related compositions, and mixtures of these. Among these compounds are other ammonium salts (inorganic and organic) particularly of organic acids (e.g., ammonium formate, ammonium citrate, ammonium acetate, ammonium oxalate), various stable amines, guanidine, guanidine carbonate, biguanide, guanylurea sulfate, melamine, dicyanimide, calcium cyanamide, biuret, 1,1' azobisformamide, methylol urea, methylol urea-urea, dimethyl urea, hexamethylenetetramine (HMTA), and mixtures of these.

Among the hydrolysis products are ammonia, ammonium hydroxide, carbamates such as ammonium carbamate, ammonium carbonate, ammonium bicarbonate and other ammonia salts, various urea complexes and half ammonia salts. The exact form of some of these compounds is not known because the techniques employed to analyze them can affect their makeup. -see U.S. Pat. No. 4,997,631 to Hofmann, *et al*. and PCT application WO 92/02291 to von Harpe, *et a*l.

Where the nature of the process calls for it, one or more enhancers can be employed. Enhancers are additive materials which modify the effectiveness of a pollutant-reducing agent in terms of its effective temperature window, its utilization efficiency, or the like. Among the enhancers are the above materials when used in suitable combination, oxygenated hydrocarbons, and mixtures of these. Exemplary of the oxygenated hydrocarbons are ketones, aldehydes, alcohols including polyols, carboxylic acids, sugars, starch hydrolysates, hydrogenated starch hydrolysates, sugar-containing residues such as molasses, and mixtures of any of these. - see U.S. Patent Nos. 4,719,092, 4,844,878 and 4,877,591.

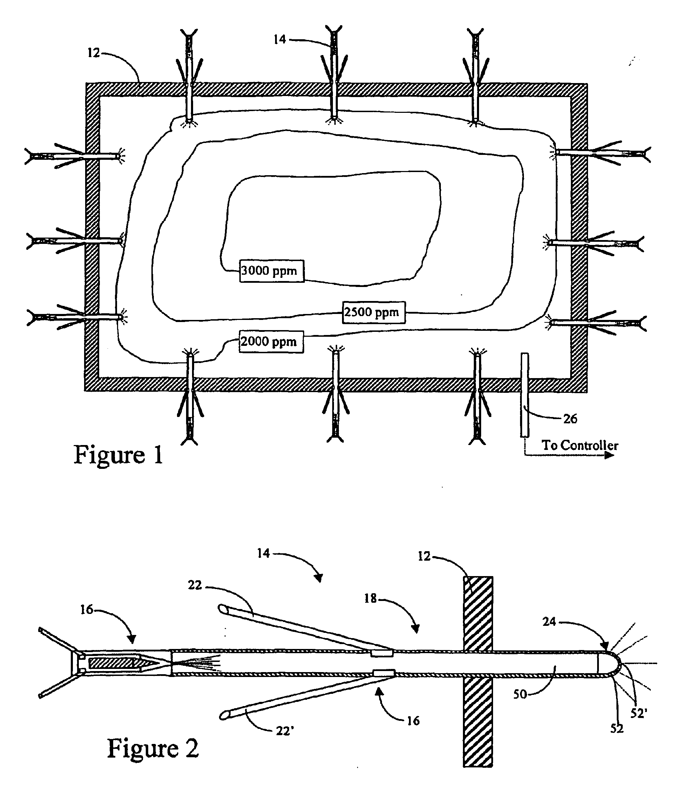

Figures 1 and 2 show a preferred form of apparatus according to the invention. Figure 1 schematically illustrates a horizontal cross section taken through a representative commercial boiler of the type used to generate steam by burning a carbonaceous fuel, like liquid or gaseous hydrocarbons, coal, refuse, and the like. The boiler wall 12 of a typical large-scale combustor is usually lined with or comprised of water-containing spaces, not shown, which make selection of location and subsequent ability to control flow there from important matters. Typically, a combustor will be modeled with the aid of computational fluid dynamics (CFD) as described for example in WO 94/26659. As is well known to those skilled in the art of combustion, the type of fuel used, the boiler configuration and steam demand can all cause variations in the amount, location and concentration of pollutant generation with the space defined for containing combustion gases. Because demands for steam can vary widely over the course of a day, it is necessary for purposes of efficiency and economy to continuously and variably control the introduction of pollution reducing chemicals for reducing concentrations within the combustion gases to achieve lower emissions. A boiler can be modeled by the use of CFD, empirical methods or some combination of techniques involving one or more of these. Figure 1 shows lines of equal NOₓ concentration within zones in the combustor, *e*.*g*., at 2000, 2500 and 3000 ppm. This is one of the possible sets of data that can be determined by CFD or measurement to aid in process control.

Reference to Figure 1 shows one preferred form of nozzle 14 according to the invention installed at a plurality of positions around the periphery of a combustor wall 12. The drawing illustrates a plurality of nozzles 14 installed in a regular pattern on a single level, but these are not requirements of the invention, and the number and location of nozzles will be determined on a case-by-case basis for individual combustors.

In a preferred form, the nozzles 14 of this invention comprise a metering valve 16, which is of the type traditionally used as an automobile fuel injector, but differs from configurations designed for that use by fitting an extension 18 to the outlet side of the valve to direct the flow or reagent through furnace water walls 12 and/or to provide penetration of reagent into exhaust or other combustion gases. Added to the liquid extension pipe 18 will be a fitting 20 for compressed air or steam from supply lines, e.g., 22, 22', to serve as an atomizing medium which directs the liquid reagent through an injector tip 24 providing both atomization and penetration into the gas stream.

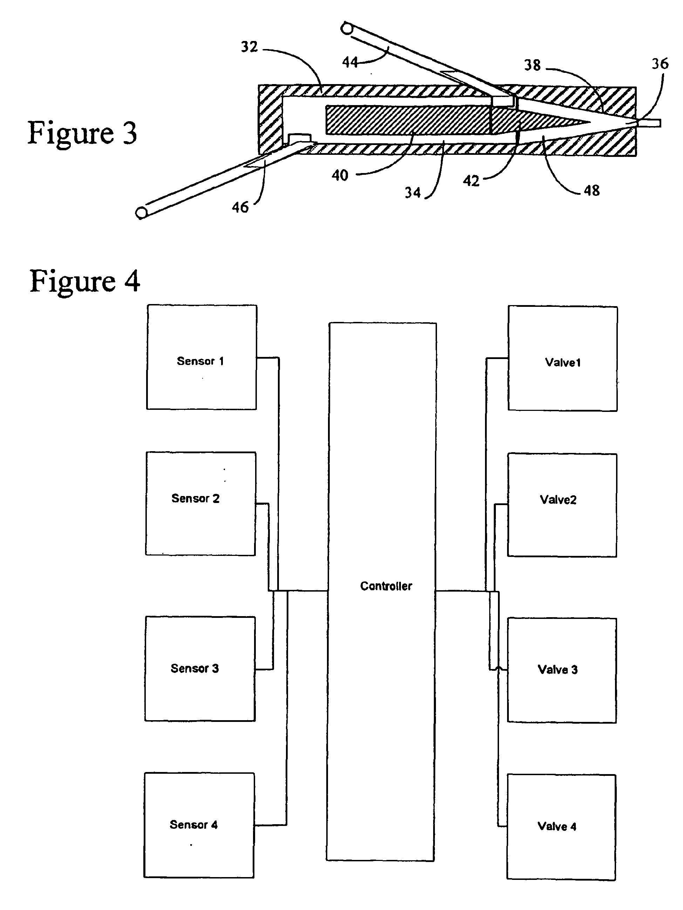

Figure 3 schematically shows, in cross section, the principal components of a preferred form of metering valve useful in the injection nozzle according to the invention. One particularly useful type of metering valve is that described in U. S. Patent No. 6,279,603 to Czamik, *et al*., identified above. This type of metering valve, is particularly designed for delivery of a liquid into a stream of hot gas.

Referring to Figure 3 there is shown an enlarged schematic view, in cross section, of a metering valve useful according to the invention. The valve 16 is shown to have a valve body 32 with an elongated annular chamber 34 in fluid communication with an orifice 36. A valve seat 38 surrounds the orifice 36. A valve plunger 40 is disposed within the chamber 34, an end of the plunger 42 being adapted to sealingly interengage the seat 38. The plunger 40 is slidably movable between an open position (left) and a closed position (right, not shown) to open and close the orifice, *i*.*e*., turn the flow from the valve on and off, respectively. A fluid inlet 44 and an outlet 46 are disposed within the valve body to deliver fluid to an annular fluid passageway in the chamber 48 adjacent to the valve seat 38.

A preferred embodiment includes means for continuously supplying pollution control chemical to the metering valve means comprised in the supply nozzles to constantly cool the metering valve means and to return chemical which is not introduced into the combustion gases to recovery means exterior to said metering valve means. As illustrated, fluid is circulated through the annular chamber 34 to cool the valve and a portion of the fluid is expelled through the orifice 36 when the orifice is opened, as shown. The metering valve means comprised in the supply nozzles preferably comprise a pintle operated by a solenoid to open and close the valve means for designated time-defined pulses, the duration of which is provided by the controller. As illustrated, the plunger 40 is biased into the closed position, *e*.*g*., by a coil spring (not shown) and is preferably movable into the open position by a solenoid actuator, which can be mounted atop the valve body as shown, for example, by Czamik, *et al*. The metering valve can be mounted on an exhaust conduit of an internal combustion engine or other combustor with the orifice in fluid communication with the exhaust gases. A heat shield surrounding the orifice can be interposed between the exhaust gases and the valve body. Also, optionally, a radiant heat reflector can be positioned between exposed parts of the injector and the exhaust conduit. Similarly, an atomizing hook can be positioned in a spaced apart relation facing the orifice to control the dispersion characteristics of the expelled fluid.

The invention will employ a plurality of metering valves of this or similar type in a configuration that permits them to be separately-controllable. Due to their solenoid actuation, they can be pulse-width modulated so as to electronically control the amount of fluid they deliver in their role as metering valve means. This is accomplished by varying the amount of time they are on, *i*.*e*., their "on time", when the orifice is in the open position and permitting the delivery of pollutant reducing chemical fluid. As shown in the drawings, metering valves 16 of this type are comprised in supply nozzles 14 at a plurality of locations within a defined space containing combustion gases including one or more pollutant species to be treated.

Figure 1 also shows a sensor means 26, representative on one or more of such that can be employed for monitoring combustion gas conditions, *e*.*g*., within the defined space or downstream thereof, and for sending an effluent characteristic signal representative of the conditions monitored to a controller.

Figure 4 schematically shows, in block diagram format, a controller 30 for comparing the effluent characteristic signals derived from one or a plurality of sensors (1-4 shown) to reference data maintained within the controller and for sending a control signal based on the comparison to one or more of the solenoid-actuated, pulse-width modulated metering valve means (*e*.*g*., as illustrated in Figures 1 to 3) to control the introduction of pollution control chemical into the effluent.

In one preferred embodiment, supply nozzles include means, e.g., means 22, 22' leading to chamber 50, for propelling the pollution control chemical by gaseous carrier fluid from the metering valves 16 to a portion of the defined space within walls 12 containing combustion gases to be treated. The nozzle 14 is seen to have openings, *e*.*g*., 52, 52', in a suitable arrangement for effective discharge of pollution control chemical.

Due to the electronic control of the valve by a controller operating in the manner illustrated in Figure 4, when multiple valves are used to support multiple injectors in a given application, each injector can be precisely controlled to match injection to the species to be controlled at specific injection points. This is a substantial improvement over fixed flow injectors which cannot be easily controlled to adjust reagent flow rate. For example, in large furnaces fired by coal, oil, gas or other fuels, computational fluid dynamic modeling allows prediction of NOx concentrations throughout the furnace. These models can predict the concentrations at various boiler loads and burner firing configuration. This information can be programmed into the control logic of the controller, *e*.*g*., a programmed digital computer, for an array of the electronically controlled injectors located around the perimeter of the furnace at a single level or multiple levels such that each injector is controlled to optimize reagent injection based on predicted NOₓ contractions. NOₓ sensors in the downstream furnace or exhaust duct can provide feedback to the injector control module to allow further refinement to the operation of each metering valve by controlling the percent on-time for pulse width modulation to maximize NOₓ reduction and minimize reagent consumption. This technique can be applied to selective non-catalytic (SNCR) or selective catalytic (SCR) reduction processes as well as urea to ammonia conversion processes or the control of other gaseous species.

The above description is intended to enable the person skilled in the art to practice the invention. It is not intended to detail all of the possible modifications and variations which will become apparent to the skilled worker upon reading the description. It is intended, however, that all such modifications and variations be included within the scope of the invention which is seen in the above description and otherwise defined by the following claims. The claims are meant to cover the indicated elements and steps in any arrangement or sequence which is effective to meet the objectives intended for the invention, unless the context specifically indicates the contrary.

## Claims

1. A method for continuously and variably controlling the introduction of pollution reducing chemicals for reducing emissions from combustion sources, comprising:
providing a plurality of separately-controllable, solenoid-actuated, pulse-width modulated metering valve means comprised in supply nozzles at a plurality of locations within a defined space containing combustion gases including one or more pollutant species to be treated,
monitoring combustion gas conditions by sensor means, which send an effluent characteristic signal representative of the conditions monitored to a controller, and
within the controller, comparing the effluent characteristic signal to reference data and sending a control signal based on the comparison to one or more of the solenoid-actuated, pulse-width modulated metering valve means to control the introduction of pollution control chemicals into the effluent.

2. A method according to claim 1, wherein the controller includes and utilizes data on predicted and actual NOₓ concentration data for a number of operating conditions within a range of possible operating conditions.

3. A method according to claim 1 or 2, wherein the controller sends control signals to determine times for individual metering valve means to be open or closed based on predicted NOₓ concentration data and adjusts those times based on measured operating conditions.

4. A method according to any one of claims 1 to 3, wherein the controller utilizes data generated by computational fluid dynamics to predict NOₓ concentration data and pollution control chemical requirements.

5. A method according to any one of claims 1 to 4, wherein supply nozzles include means for propelling the pollution control chemical by gaseous carrier fluid from the metering valves to a portion of the defined space containing combustion gases to be treated.

6. A method according to any one of claims 1 to 5, wherein pollution control chemical is continuously supplied to the metering valve means comprised in the supply nozzles to constantly cool the metering valve means, with chemical which is not introduced into the combustion gases being returned to recovery means exterior to said metering valve means.

7. A method according to any one of claims 1 to 6, wherein metering valve means comprised in the supply nozzles comprise a pintle operated by a solenoid to open and close the valve means for designated time-defined pulses, the duration of which is provided by the controller.

8. A method according to any one of claims 1 to 7, wherein gaseous carrier fluid is continuously supplied to the supply nozzles to disperse the pollution control chemical supplied by the metering valve means and to control the temperature of the nozzles.

9. A method according to any one of claims 1 to 8, wherein conditions are monitored in the defined space or downstream of said location.

10. An apparatus for continuously and variably controlling the introduction of pollution reducing chemicals for reducing emissions from combustion sources, comprising:
a plurality of separately-controllable, solenoid-actuated, pulse-width modulated metering valve means comprised in supply nozzles at a plurality of locations within a defined space containing combustion gases including one or more pollutant species to be treated,
sensor means for monitoring conditions within the defined space and for sending an effluent characteristic signal representative of the conditions monitored to a controller,
a controller for comparing the effluent characteristic signal to reference data and for sending a control signal based on the comparison to one or more of the solenoid-actuated, pulse-width modulated metering valve means to control the introduction of pollution control chemical into the effluent.

11. An apparatus according to claim 10, wherein supply nozzles include means for propelling the pollution control chemical by gaseous carrier fluid from the metering valves to a portion of the defined space containing combustion gases to be treated.

12. An apparatus according to claim 10 or 11, which includes means for continuously supplying pollution control chemical to the metering valve means comprised in the supply nozzles to constantly cool the metering valve means and to return chemical which is not introduced into the combustion gases to recovery means exterior to said metering valve means.

13. An apparatus according to any one of claims 10 to 12, wherein metering valve means comprised in the supply nozzles comprise a pintle operated by a solenoid to open and close the valve means for designated time-defined pulses, the duration of which is provided by the controller.

14. An apparatus according to any one of claims 10 to 13, which further includes pressurized gas means to continuously supply gaseous carrier fluid to the supply nozzles to disperse the pollution control chemical supplied by the metering valve means and to control the temperature of the nozzles.

## Patentansprüche

1. Verfahren zum kontinuierlichen und variablen Steuern der Zugabe von Umweltverschmutzung verringernden Chemikalien zum Verringern von Emissionen aus Verbrennungsquellen, umfassend:
das Bereitstellen mehrerer Zufuhrdüsen, umfassend unabhängig kontrollierbare, mittels Zylinderspulen betätigte impulsbreitenmodulierte Dosierventilvorrichtungen, an mehreren Stellen innerhalb eines definierten Raums, welcher eine oder mehrere zu behandelnde, umweltverschmutzende Spezies enthaltende Verbrennungsgase enthält,
das Überwachen der Bedingungen des Verbrennungsgases durch Messfühlervorrichtungen, welche ein für das Abgas charakteristisches, für die überwachten Bedingungen repräsentatives Signal an einen Controller senden, und
innerhalb des Controllers, das Vergleichen des für das Abgas charakteristischen Signals mit Bezugsdaten und das Senden eines Steuersignals, basierend auf dem Vergleich mit einer oder mehrerer der mittels Zylinderspulen betätigten impulsbreitenmodulierten Dosierventilvorrichtungen, um das Einbringen von Umweltverschmutzung regulierenden Chemikalien in das Abgas zu steuern.

2. Verfahren gemäß Anspruch 1, wobei der Controller Daten zu vorhergesagten und tatsächlichen NOₓ-Konzentrationsdaten für eine Reihe von Betriebsbedingungen innerhalb eines Bereichs möglicher Betriebsbedingungen beinhaltet und verwendet.

3. Verfahren gemäß Anspruch 1 oder 2, wobei der Controller, auf Basis der vorhergesagten NOₓ-Konzentrationsdaten Steuersignale aussendet, um die Zeiten, zu denen einzelne Dosierventilvorrichtungen geöffnet oder geschlossen sind, zu bestimmen, und diese Zeiten auf Basis der gemessenen Betriebsbedingungen anpasst.

4. Verfahren gemäß einem der Ansprüche 1 bis 3, wobei der Controller computergenerierte Fluiddynamikdaten verwendet, um NOₓ-Konzentrationsdaten und den Bedarf an Umweltverschmutzung regulierenden Chemikalien vorherzusagen.

5. Verfahren gemäß einem der Ansprüche 1 bis 4, wobei die Zufuhrdüsen Vorrichtungen enthalten, welche die Umweltverschmutzung regulierende Chemikalie mittels eines gasförmigen Trägerfluids von den Dosierventilen zu einem Teil des definierten Raums, welcher die zu behandelnden Verbrennungsgase enthält, treiben.

6. Verfahren gemäß einem der Ansprüche 1 bis 5, wobei die Umweltverschmutzung regulierende Chemikalie den in den Zufuhrdüsen umfassten Dosierventilvorrichtungen kontinuierlich zugeführt wird, um die Dosierventilvorrichtungen fortlaufend zu kühlen, mit einer Chemikalie, welche nicht in die Verbrennungsgase eingebracht wird, und welche zu Rückgewinnungsvorrichtungen rückgeführt wird, welche außerhalb der Dosierungsventilvorrichtungen liegen.

7. Verfahren gemäß einem der Ansprüche 1 bis 6, wobei die in den Zufuhrdüsen umfassten Dosierventilvorrichtungen einen mittels einer Zylinderspule gesteuerten Zapfen umfassen, um die Ventilvorrichtung für bestimmte zeitlich definierte Impulse zu öffnen und zu schließen, wobei die Dauer hierbei durch den Controller bestimmt wird.

8. Verfahren gemäß einem der Ansprüche 1 bis 7, wobei das gasförmige Trägerfluid den Zufuhrdüsen kontinuierlich zugeführt wird, um die Umweltverschmutzung regulierende Chemikalie, welche von den Dosierventilvorrichtungen bereitgestellt wird, zu verteilen und um die Temperatur der Düsen zu steuern.

9. Verfahren gemäß einem der Ansprüche 1 bis 8, wobei die Bedingungen in dem definierten Raum oder stromabwärts dieser Stelle überwacht werden.

10. Gerät zum kontinuierlichen und variablen Steuern der Zufuhr von Umweltverschmutzung verringernden Chemikalien zum Verringern von Emissionen aus Verbrennungsquellen, umfassend:
Zufuhrdüsen, umfassend mehrere unabhängig kontrollierbare, mittels einer Zylinderspule betätigte impulsbreitenmodulierte Dosierventilvorrichtungen an mehreren Stellen innerhalb eines definierten Raums, welcher eine oder mehrere zu behandelnde, umweltverschmutzende Spezies enthaltende Verbrennungsgase enthält,
eine Sensorvorrichtung zum Überwachen der Bedingungen innerhalb des definierten Raums und zum Senden eines für das Abgas charakteristischen Signals, welches für die überwachten Bedingungen repräsentativ ist, an einen Controller,
einen Controller zum Vergleichen des für das Abgas charakteristischen Signals mit Bezugsdaten und zum Senden eines auf dem Vergleich mit einer oder mehrerer der mittels einer Zylinderspule betätigten, impulsbreitenmodulierten Dosierventilvorrichtungen basierenden Steuersignals, um das Einbringen von Umweltverschmutzung regulierenden Chemikalien zum Abgas zu steuern.

11. Gerät gemäß Anspruch 10, wobei die Zufuhrdüsen Vorrichtungen enthalten, welche die Umweltverschmutzung regulierende Chemikalie mittels eines gasförmigen Trägerfluids von den Dosierventilen zu einem Teil des definierten Raums, welcher die zu behandelnden Verbrennungsgase enthält, treiben.

12. Gerät gemäß Anspruch 10 oder 11, welches eine Vorrichtung zum kontinuierlichen Zuführen von Umweltverschmutzung regulierender Chemikalie zu den in den Zufuhrdüsen umfassten Dosierventilvorrichtungen enthält, um die Dosierventilvorrichtungen fortlaufend zu kühlen, und um die Chemikalie, welche nicht in die Verbrennungsgase eingebracht wird, zu Rückgewinnungsvorrichtungen rückzuführen, welche außerhalb der Dosierventilvorrichtungen liegen.

13. Gerät gemäß einem der Ansprüche 10 bis 12, wobei die in den Zufuhrdüsen umfassten Dosierventilvorrichtungen einen mittels einer Zylinderspule gesteuerten Zapfen umfassen, um die Ventilvorrichtung für bestimmte zeitlich definierte Impulse zu öffnen und zu schließen, wobei die Dauer hierfür durch den Controller bestimmt wird.

14. Gerät gemäß einem der Ansprüche 10 bis 13, welches weiterhin eine Druckgasvorrichtung umfasst, um den Zufuhrdüsen kontinuierlich gasförmiges Trägerfluid zuzuführen, um die Umweltverschmutzung regulierende Chemikalie, welche durch die Dosierventilvorrichtungen zugeführt wird, zu verteilen, und um die Temperatur der Düsen zu steuern.

## Revendications

1. Procédé pour commander en continu et de manière variable l'introduction de produits chimiques réduisant la pollution pour réduire les émissions provenant de sources de combustion, consistant à :
disposer d'une pluralité de moyens formant soupapes de dosage séparément contrôlables, commandés par un solénoïde, modulés en largeur d'impulsion, se trouvant dans des buses d'alimentation en une pluralité d'emplacements à l'intérieur d'un espace défini contenant des gaz de combustion comprenant une ou plusieurs espèces polluantes devant être traitées,
surveiller les conditions du gaz de combustion par des moyens capteurs, qui envoient à un contrôleur un signal caractéristique de l'effluent, représentatif des conditions surveillées, et
à l'intérieur du contrôleur, comparer le signal caractéristique de l'effluent avec des données de référence et envoyer un signal de commande basé sur la comparaison avec un ou plusieurs des moyens formant soupapes de dosage commandés par un solénoide, modulés en largeur d'impulsion, pour commander l'introduction dans l'effluent de produits chimiques régulant la pollution.

2. Procédé selon la revendication 1, dans lequel le contrôleur comprend et utilise des données de concentrations de NOₓ prédites et réelles pour un certain nombre de conditions de fonctionnement à l'intérieur d'une gamme de conditions de fonctionnement possibles.

3. Procédé selon la revendication 1 ou 2, dans lequel le contrôleur envoie des signaux de commande pour déterminer les temps d'ouverture ou de fermeture des moyens formant soupapes de dosage individuels sur la base des données de concentration de NOₓ prédite et ajuste ces temps sur la base de conditions de fonctionnement mesurées.

4. Procédé selon l'une quelconque des revendications 1 à 3, dans lequel le contrôleur utilise des données générées par une dynamique des fluides informatisée pour prédire les données de concentration de NOₓ et les besoins en produits chimiques régulant la pollution.

5. Procédé selon l'une quelconque des revendications 1 à 4, dans lequel les buses d'alimentation comprennent des moyens pour propulser le produit chimique régulant la pollution au moyen d'un fluide porteur gazeux depuis les soupapes de dosage vers une partie de l'espace défini contenant les gaz de combustion devant être traités.

6. Procédé selon l'une quelconque des revendications 1 à 5, dans lequel le produit chimique régulant la pollution est délivré en continu aux moyens formant soupapes dé dosage se trouvant dans les buses d'alimentation pour refroidir constamment les moyens formant soupapes de dosage, le produit chimique qui n'est pas introduit dans les gaz de combustion étant renvoyé vers des moyens dé récupération à l'extérieur desdits moyens formant soupapes de dosage.

7. Procédé selon l'une quelconque des revendications 1 à 6, dans lequel les moyens formant soupapes de dosage se trouvant dans les buses d'alimentation comprennent un axe, commandé par un solénoïde, pour ouvrir et fermer les moyens formant soupapes pendant des impulsions établies, définies dans le temps, dont la durée est fournie par le contrôleur.

8. Procédé selon l'une quelconque des revendications 1 à 7, dans lequel le fluide porteur gazeux est délivré en continu aux buses d'alimentation pour disperser le produit chimique régulant la pollution délivré par les moyens formant soupapes de dosage et pour contrôler la température des buses.

9. Procédé selon l'une quelconque des revendications 1 à 8, dans lequel les conditions sont surveillées dans l'espace défini ou en aval dudit emplacement.

10. Dispositif pour commander en continu et de manière variable l'introduction de produits chimiques réduisant la pollution pour réduire les émissions provenant de sources de combustion, comprenant :
une pluralité de moyens formant soupapes de dosage séparément contrôlables, commandés par un solénoïde, modulés en largeur d'impulsion, se trouvant dans des buses d'alimentation en une pluralité d'emplacements à l'intérieur d'un espace défini contenant des gaz de combustion comprenant une ou plusieurs espèces polluantes devant être traitées,
des moyens capteurs pour surveiller les conditions, à l'intérieur de l'espace défini et pour envoyer à un contrôleur un signal caractéristique de l'effluent, représentatif des conditions surveillées, et
un contrôleur pour comparer le signal caractéristique de l'effluent avec des données de référence et pour envoyer un signal de commande basé sur la comparaison avec un ou plusieurs des moyens formant soupapes de dosage commandés par un solénoïde, modulés en largeur d'impulsion, pour commander l'introduction dans l'effluent de produits chimiques régulant la pollution.

11. Dispositif selon la revendication 10, dans lequel les buses d'alimentation comprennent des moyens pour propulser le produit chimique régulant la pollution au moyen d'un fluide porteur gazeux depuis les soupapes de dosage vers une partie de l'espace défini contenant les gaz de combustion devant être traités.

12. Dispositif selon la revendication 10 ou 11, qui comprend des moyens pour délivrer en continu le produit chimique régulant la pollution aux moyens formant soupapes de dosage se trouvant dans les buses d'alimentation pour refroidir constamment les moyens formant soupapes de dosage, et renvoyer le produit chimique qui n'est pas introduit dans les gaz de combustion vers des moyens de récupération à l'extérieur desdits moyens formant soupapes dé dosage.

13. Dispositif selon l'une quelconque des revendications 10 à 12, dans lequel les moyens formant soupapes de dosage se trouvant dans les buses d'alimentation comprennent un axe, commandé par un solénoide, pour ouvrir et fermer les moyens formant soupapes pendant des impulsions établies, définies dans le temps, dont la durée est fournie par le contrôleur.

14. Dispositif selon l'une quelconque des revendications 10 à 13, qui comprend en outre des moyens de gaz pressurisé pour délivrer en continu un fluide porteur gazeux aux buses d'alimentation pour disperser le produit chimique régulant la pollution délivré par les moyens formant soupapes de dosage et pour contrôler la température des buses.
